# FASCICULE DE BREVET EUROPEEN

(11) **EP 0 945 301 B1**
(45) Date de publication et mention de la délivrance du brevet: **31.08.2005**
(21) Numéro de dépôt: 99400697.1
(22) Date de dépôt: 22.03.1999
(51) Int. Cl.: B60N 2/12

(54) **Glissière pour siège de véhicule et siège comportant une telle glissiere**
Gleitschiene für Fahrzeugsitz und mit solcher Schiene ausgerüsteter Sitz
Slide for vehicle seat and seat equipped with such a slide

(30) Priorité: 24.03.1998 FR 9803597
(43) Date de publication de la demande: 29.09.1999
(73) Titulaire: FAURECIA SIEGES D'AUTOMOBILE S.A., 92100 Boulogne-Billancourt (FR)
(72) Inventeur: Foucault, Laurent, 61140 Tesse La Madeleine (FR); Calor, Hervé, 61440 Messei (FR)
(74) Mandataire: Burbaud, Eric

(56) Documents cités:
- EP-A- 0 669 220
- EP-A- 0 683 066
- EP-A- 0 723 889
- WO-A-97/03861
- FR-A- 2 695 885

## Description

La présente invention est relative aux glissières pour sièges de véhicules et aux sièges comportant de telles glissières.

Plus particulièrement, l'invention concerne une glissière pour siège de véhicule, comportant :
- un profilé fixe, destiné à être solidarisé avec le véhicule,
- un profilé mobile, qui est monté coulissant le long du profilé fixe et qui est destiné à être solidarisé avec le siège pour permettre un déplacement de ce siège dans une direction dite longitudinale, vers l'avant et vers l'arrière, le profilé mobile délimitant avec le profilé fixe un espace intérieur creux dans la glissière,
- un verrou de glissière qui est monté sur le profilé mobile et qui est déplaçable entre, d'une part, une position verrouillée où ledit verrou de glissière coopère avec le profilé fixe pour bloquer le profilé mobile, et d'autre part, une position déverrouillée où ledit verrou de glissière ne coopère pas avec le profilé fixe et permet le coulissement dudit profilé mobile, le verrou de glissière étant sollicité élastiquement vers sa position verrouillée,
- un patin de mémorisation qui est monté coulissant par rapport au profilé fixe parallèlement à la direction longitudinale, ce patin de mémorisation étant disposé dans l'espace intérieur de la glissière et limitant le mouvement du profilé mobile vers l'arrière, en définissant ainsi une position mémorisée du profilé mobile,
- un verrou de patin qui est porté par le patin de mémorisation et qui est déplaçable entre, d'une part, une position verrouillée où ledit verrou de patin coopère avec des crans solidaires du profilé fixe pour immobiliser le patin de mémorisation par rapport au profilé fixe, et d'autre part, une position déverrouillée où ledit verrou de patin n'immobilise pas le patin de mémorisation,
- un dispositif d'accrochage de patin qui est monté sur le profilé mobile et qui est déplaçable entre, d'une part, une position accouplée où ledit dispositif d'accrochage solidarise le patin de mémorisation avec le profilé mobile, et d'autre part, une position désaccouplée où ledit dispositif d'accrochage ne solidarise pas le patin de mémorisation avec le profilé mobile,
- des premiers moyens de commande adaptés pour déplacer simultanément le verrou de glissière de sa position verrouillée à sa position déverrouillée et le dispositif d'accrochage de sa position désaccouplée à sa position accouplée, de façon à permettre un coulissement simultané du profilé mobile et du patin de mémorisation par rapport au profilé fixe, soit vers l'avant soit vers l'arrière, afin de régler la position mémorisée du siège,
- et des deuxièmes moyens de commande adaptés pour déplacer le verrou de glissière de sa position verrouillée à sa position déverrouillée sans déplacer le dispositif d'accrochage dans sa position accouplée, de façon à permettre un coulissement du profilé mobile vers l'avant sans déplacement du patin de mémorisation.

Les glissières de ce type sont utilisées en particulier pour équiper les sièges avant de véhicules à deux portes. Pour accéder aux places arrière d'un tel véhicule, on actionne les deuxièmes moyens de commande, généralement en rabattant le dossier vers l'avant, puis on fait coulisser le siège vers l'avant jusqu'à une position de butée. Pour remettre ensuite le siège dans sa position initiale, on le fait coulisser vers l'arrière jusqu'à sa position initiale, matérialisée par le patin de mémorisation.

Le document FR-A-2 695 885 décrit un exemple d'une telle glissière, dans laquelle le patin de mémorisation est simplement emprisonné dans l'espace intérieur creux de la glissière, ce patin de mémorisation comportant un bec qui constitue le verrou de patin et qui est déplaçable entre ses positions verrouillée et déverrouillée par pivotement de l'ensemble du patin sur lui-même. Dans cette glissière connue, le bec du patin de mémorisation est sollicité élastiquement vers sa position verrouillée par un ressort à lame qui prend appui sous l'âme supérieure du profilé mobile, de façon que ce bec coopère avec une crémaillère formée dans le fond du profilé fixe, ladite crémaillère étant orientée pour empêcher le coulissement du patin de mémorisation vers l'arrière.

La glissière présentée dans ce document donne globalement satisfaction, mais présente néanmoins les inconvénients suivants :
- lorsque le profilé mobile de la glissière est déplacé vers l'arrière après avoir été déplacé vers l'avant suite à un actionnement des deuxièmes moyens de commande, le patin de mémorisation peut éventuellement perdre sa position mémorisée et reculer d'un ou plusieurs crans lorsque le profilé mobile bute violemment contre ledit patin de mémorisation, ce qui peut se produire dans certaines circonstances,
- le patin de mémorisation est libre tant que le profilé mobile n'est pas monté sur le profilé fixe de la glissière, ce qui complique le montage de ladite glissière,
- et le contact glissant du ressort à lame sous l'âme supérieure du profilé mobile implique que ladite âme présente une piste de glissement lisse, ce qui impose une contrainte supplémentaire lors de la conception de la glissière.

Par ailleurs, le document EP-0 669 220 décrit un exemple de glissière qui, outre les dispositions susmentionnées, divulgue en outre le fait que le patin de mémorisation coopère par emboîtement avec frottement, avec un guide longitudinal solidaire du profilé fixe, le profilé mobile de la glissière comportant une cale qui fait saillie dans l'espace intérieur creux de ladite glissière, cette cale présentant une surface de came qui est adaptée pour coopérer avec une surface d'appui appartenant au verrou de patin, et le frottement entre le patin de mémorisation et le guide correspondant étant suffisamment important pour que l'action de la surface de came de la cale sur la surface d'appui du verrou de patin n'entraîne pas de coulissement longitudinal du patin de mémorisation.

La présente invention a notamment pour but de pallier aux inconvénients susmentionnés.

A cet effet, selon l'invention, une glissière du genre en question est essentiellement caractérisée :
- en ce que le verrou de patin est sollicité élastiquement vers sa position déverrouillée par un ressort monté sur le patin de mémorisation,
- et en ce que ladite surface de came est conformée pour laisser le verrou de patin dans sa position déverrouillée lorsque le profilé mobile de la glissière est dans sa position mémorisée, et pour déplacer le verrou de patin dans sa position verrouillée lorsque le profilé mobile n'est pas dans sa position mémorisée, au moins lorsque ledit profilé mobile quitte sa position mémorisée ou revient dans ladite position mémorisée.

Grâce à ces dispositions, le verrou de patin est maintenu positivement dans sa position verrouillée lorsque le profilé mobile de la glissière quitte sa position mémorisée ou revient dans ladite position mémorisée, c'est-à-dire aux instant précis où le patin de mémorisation pourrait perdre la position mémorisée du fait de sa coopération avec d'autres éléments de la glissière. On garantit ainsi une bonne mémorisation de la dernière position de réglage de la glissière, tout en faisant appel à des moyens simples et peu coûteux.

Par ailleurs, le patin de mémorisation est tenu par son guide même avant montage du profilé mobile sur le profilé fixe, ce qui facilite l'assemblage de la glissière.

Enfin, la présente invention ne requiert pas de contact glissant entre un élément du patin de mémorisation et l'âme supérieure du profilé mobile, ce qui simplifie la conception de la glissière.

Dans des modes de réalisation préférés de l'invention, on peut éventuellement avoir recours en outre à l'une et/ou à l'autre des dispositions suivantes :
- la surface de came de la cale est conformée pour déplacer le verrou de patin dans sa position verrouillée uniquement lorsque le profilé mobile de la glissière se trouve décalé vers l'avant de sa position mémorisée, à une distance de ladite position mémorisée inférieure à une distance prédéterminée, laquelle distance prédéterminée est inférieure à 1 cm, de façon que le verrou de patin soit dans sa position verrouillée uniquement lorsque le profilé mobile vient de quitter sa position mémorisée ou revient dans ladite position mémorisée ;
- le verrou de glissière est une pièce métallique élastique contenue dans l'espace intérieur creux de ladite glissière ;
- le profilé fixe comporte un fond horizontal qui porte le patin de mémorisation, le profilé mobile présentant une âme supérieure horizontale qui est solidaire de ladite cale et qui porte un curseur monté coulissant longitudinalement par rapport audit profilé mobile entre des position avant et arrière, ce curseur présentant une extrémité avant et une extrémité arrière, et l'extrémité avant dudit curseur étant montée pivotante par rapport au profilé mobile autour d'un premier axe horizontal transversal, de façon que ce curseur soit déplaçable entre une position parallèle audit profilé mobile et une position inclinée vers l'espace intérieur creux de la glissière, ladite extrémité arrière portant un crochet qui est monté pivotant par rapport audit curseur autour d'un deuxième axe horizontal transversal, entre des positions haute et basse, ce crochet étant sollicité élastiquement vers sa position basse et présentant un bec orienté vers le bas qui est adapté pour pénétrer dans un logement appartenant au patin de mémorisation lorsque le curseur est dans sa position inclinée par rapport au profilé mobile et que ledit profilé mobile est dans sa position mémorisée, le curseur et son crochet formant ainsi ledit dispositif d'accrochage, le curseur comportant en outre une surface de came qui coopère avec le verrou de glissière pour déplacer ledit verrou de glissière de sa position verrouillée à sa position déverrouillée lorsque le curseur passe de sa position avant à sa position arrière sous l'action des deuxièmes moyens de commande, le verrou de glissière comportant par ailleurs un rebord d'appui qui est adapté pour agir sur une surface d'appui complémentaire appartenant au curseur lorsque le verrou de glissière est déplacé dans sa position déverrouillée sous l'action des premiers moyens de commande, et le curseur étant sollicité élastiquement à la fois vers sa position arrière et vers sa position horizontale ;
- le curseur est sollicité à la fois vers sa position arrière et vers sa position horizontale par un même ressort de traction qui est monté entre d'une part, une patte de support qui est solidaire du profilé mobile de la glissière et qui est disposée au-dessus du niveau de l'axe de pivotement du curseur, et d'autre part, une tête d'accrochage supérieure disposée vers l'extrémité avant dudit curseur ;
- le crochet est conformé pour s'engager dans le logement du patin de mémorisation avant que le verrou de glissière ne permette le coulissement du profilé mobile, lors de l'actionnement des premiers moyens de commande ;
- le crochet est conformé pour permettre l'entraînement du patin de mémorisation vers l'avant lorsque ledit crochet est engagé dans le logement correspondant du patin, le patin de mémorisation étant par ailleurs en contact avec une butée solidaire du profilé mobile lorsque ledit profilé mobile est dans sa position mémorisée, ladite butée étant disposée vers l'avant du patin de mémorisation et permettant d'entraîner ce patin vers l'arrière lors de l'actionnement des premier moyens de commande ;
- le crochet présente une extrémité arrière dotée d'une surface de came qui coopère avec le verrou de patin lors de l'actionnement des deuxièmes moyens de commande, pour déplacer alors le verrou de patin dans sa position verrouillée tandis que le crochet passe dans sa position haute par rapport au curseur ;
- la surface de came du crochet est conformée pour que, lors de l'actionnement des deuxièmes moyens de commande, le verrou de patin passe dans sa position verrouillée avant que le verrou de glissière ne permette le coulissement du profilé mobile ;
- le patin de mémorisation présente un bord avant qui est conformé pour que, lorsque le curseur est dans sa position inclinée et que le crochet est dans sa position basse, si le crochet n'est pas engagé dans le logement correspondant du patin de mémorisation, alors la surface de came dudit crochet est adaptée pour glisser contre le bord avant incliné du patin de mémorisation lors d'un déplacement vers l'arrière du profilé mobile, en relevant ainsi le crochet jusqu'à ce que le bec dudit crochet s'engage dans le logement correspondant du patin de mémorisation ;
- le crochet est solidaire d'un bec auxiliaire qui, lorsque que le curseur est déplacé dans sa position arrière sous l'action des deuxièmes moyens de commande, se trouve au-dessus d'un logement ménagé dans l'âme supérieure du profilé mobile, ce bec auxiliaire étant adapté pour s'engager dans le logement correspondant lorsque le profilé mobile quitte sa position mémorisée et que la surface de came du crochet cesse de coopérer avec le patin de mémorisation, ledit bec auxiliaire étant adapté pour retenir ensuite le curseur dans sa position arrière jusqu'à ce que le profilé mobile revienne dans sa position mémorisée, où la surface de came du crochet soulève à nouveau ledit crochet et libère le bec auxiliaire de son logement.

Par ailleurs, l'invention a également pour objet un siège de véhicule comportant une assise montée coulissante longitudinalement au moyen d'au moins une glissière telle que définie ci-dessus, l'assise du siège étant fixée au profilé mobile de la glissière.

Enfin, l'invention a encore pour objet un siège de véhicule comportant une assise montée coulissante longitudinalement au moyen d'une première glissière telle que définie ci-dessus et d'une deuxième glissière comprenant également un profilé fixe, un profilé mobile et un verrou de glissière déplaçable entre des positions verrouillée et déverrouillée, l'assise du siège étant fixée aux profilés mobiles des glissières, le curseur de la première glissière étant relié au moyen d'une biellette, à une barre de liaison transversale qui est montée pivotante sur les profilés mobiles des deux glissières et qui comporte un rebord d'appui coopérant avec le verrou de glissière de la deuxième glissière pour déplacer ledit verrou de la deuxième glissière dans sa position déverrouillée lors de l'actionnement des deuxièmes moyens de commande.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un siège de véhicule équipé d'une glissière selon une forme de réalisation de l'invention,
- la figure 2 est une vue en perspective représentant les glissières du siège de la figure 1,
- la figure 3 est une vue en coupe longitudinale d'une des glissières de la figure 2, en position de repos, la coupe étant prise selon la ligne III-III de la figure 4,
- la figure 4 est une vue en coupe selon la ligne IV-IV de la figure 3,
- la figure 5 est une vue écorchée partielle de la glissière des figures 3 et 4, montrant le mécanisme de verrouillage et de mémorisation de cette glissière,
- la figure 5a est une vue d'avant en perspective du patin de mémorisation de la glissière,
- les figures 6 à 8 sont des vues similaires à la figure 3, respectivement pendant un réglage de la position longitudinale de la glissière, lors du retour de la glissière dans sa position précédemment mémorisée pour le cas où ladite position mémorisée aurait été malencontreusement perdue, et lors d'un accès aux places arrière du véhicule,
- et la figure 9 est une vue similaire à la figure 3, pour une variante de l'invention.

Sur les différentes figures, les mêmes références désignent des éléments identiques ou similaires.

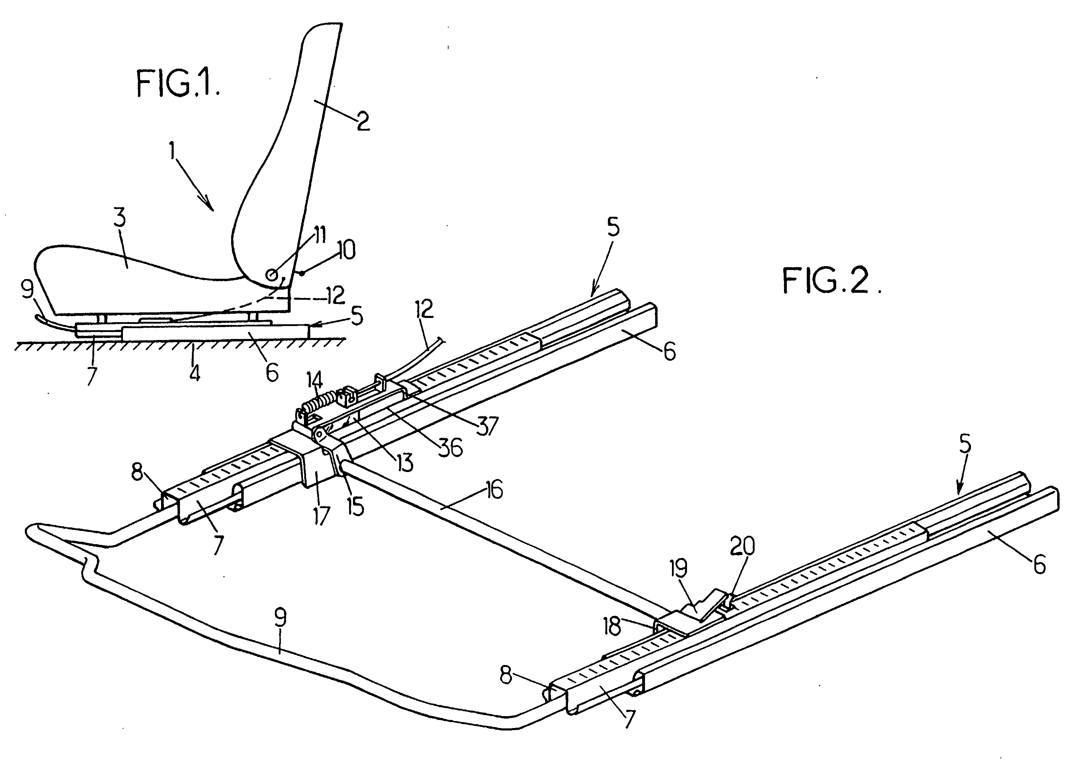

La figure 1 représente un siège 1, notamment un siège avant de véhicule, qui comporte un dossier 2 monté pivotant sur une assise 3, elle-même fixée au plancher 4 du véhicule par l'intermédiaire de deux glissières parallèles 5, qui s'étendent chacune dans une direction dite longitudinale, en permettant un déplacement de l'ensemble du siège 1 vers l'avant et vers l'arrière.

Chaque glissière 5 comporte, d'une part, un profilé fixe 6 solidarisé avec le plancher 4 du véhicule, et d'autre part, un profilé mobile 7 qui est solidarisé avec l'assise 3 du siège et qui est monté coulissant sur le profilé fixe parallèlement à ladite direction longitudinale.

Les profilés fixe et mobile 6,7 de chaque glissière délimitent entre eux un espace intérieur creux 8 (voir figure 2), dans lequel est logé un verrou de glissière qui sera décrit plus en détail ci-après, et qui se trouve normalement dans une position verrouillée où il bloque le profilé mobile 7 de la glissière correspondante.

Les verrous des deux glissières 5 peuvent être déverrouillés simultanément lorsque le passager du siège 1 tire vers le haut sur un arceau de commande 9 qui présente une forme générale de U dont la base est située sous l'extrémité avant du siège et dont les branches pénètrent dans les espaces intérieurs creux 8 des deux glissières 5 pour rejoindre les verrous de glissière correspondants.

Pour régler la position longitudinale du siège, on actionne l'arceau de commande 9, ce qui déverrouille les verrous des deux glissières 5 et permet le coulissement des profilés mobiles 7 de ces deux glissières. Au cours de ce mouvement, le profilé mobile 7 d'une des deux glissières entraîne avec lui un patin de mémorisation qui sera décrit ci-après.

Ce patin de mémorisation permet de mémoriser le dernier réglage de position longitudinale du siège, lorsqu'un utilisateur veut déplacer rapidement l'ensemble du siège au maximum vers l'avant, par exemple pour accéder aux places arrière du véhicule si le siège 1 est placé à l'avant d'un véhicule à deux portes latérales.

Lorsqu'un utilisateur veut accéder aux places arrière ou quitter les places arrière de ce véhicule, il actionne par exemple une manette 10 (figure 1) ou autre organe de commande qui libère le dossier 2 en rotation autour d'un axe de pivotement horizontal transversal 11. Le dossier 2 pivote alors généralement automatiquement vers l'avant, sous l'action d'un ressort interne audit dossier (non représenté), jusqu'à une position rabattue vers l'avant.

Ce mouvement de pivotement du dossier 2 entraîne une traction sur un câble gainé 12, lequel câble entraîne alors vers l'arrière un curseur 13 (figure 2) qui est monté coulissant dans la direction longitudinale sur le profilé mobile 7 de la glissière qui comporte le patin de mémorisation, ce curseur 13 étant normalement maintenu dans une position avant par un ressort de rappel 14.

Comme il sera expliqué ci-après, le mouvement du curseur 13 jusqu'à sa position arrière provoque un déverrouillage du verrou de la glissière 5 qui comporte ce curseur. De plus, le curseur 13 entraîne également en pivotement une biellette 15 qui est solidaire d'une barre de liaison horizontale transversale 16 dont les extrémités sont montées pivotantes sur des flasques 17, 18 solidarisés respectivement avec les profilés mobiles 7 des deux glissières.

L'extrémité de la barre de liaison 16 qui est située près de la glissière 5 ne comportant pas le curseur 13, est solidaire d'un levier 19 qui s'étend vers l'arrière et qui est adapté pour pivoter en venant appuyer sur l'extrémité arrière 20 du verrou de glissière correspondant lorsque le curseur 13 est déplacé jusqu'à sa position arrière.

Ainsi, lorsque le dossier 2 est rabattu vers l'avant, les verrous des deux glissières sont déverrouillés et l'assise 3 peut être déplacée au maximum vers l'avant, tandis que le patin de mémorisation susmentionné reste en place pour limiter ensuite le mouvement du siège vers l'arrière. Lorsque l'utilisateur du siège veut ensuite déplacer le siège vers l'arrière pour le remettre en position d'utilisation, le siège s'arrête automatiquement dans sa position initiale, c'est-à-dire dans la dernière position longitudinale réglée par ledit utilisateur.

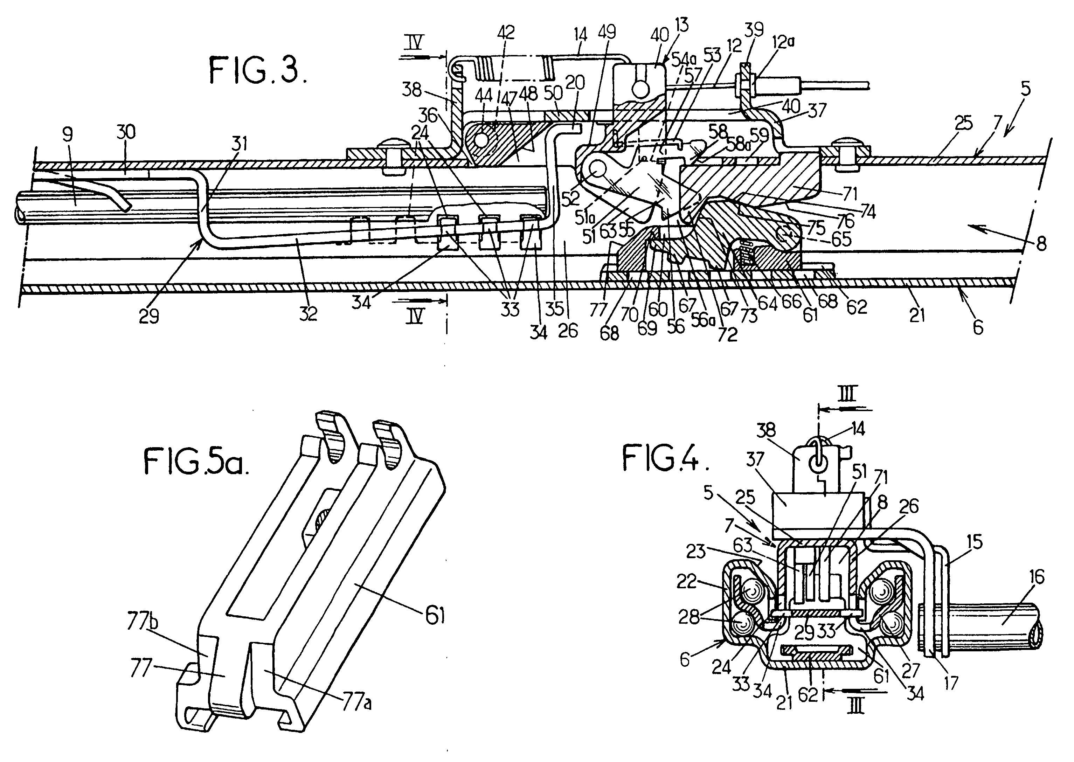

Les moyens qui permettent d'obtenir ce résultat vont maintenant être décrits plus en détail, en regard des figures 3 à 5, qui montrent un exemple particulier de réalisation de l'invention.

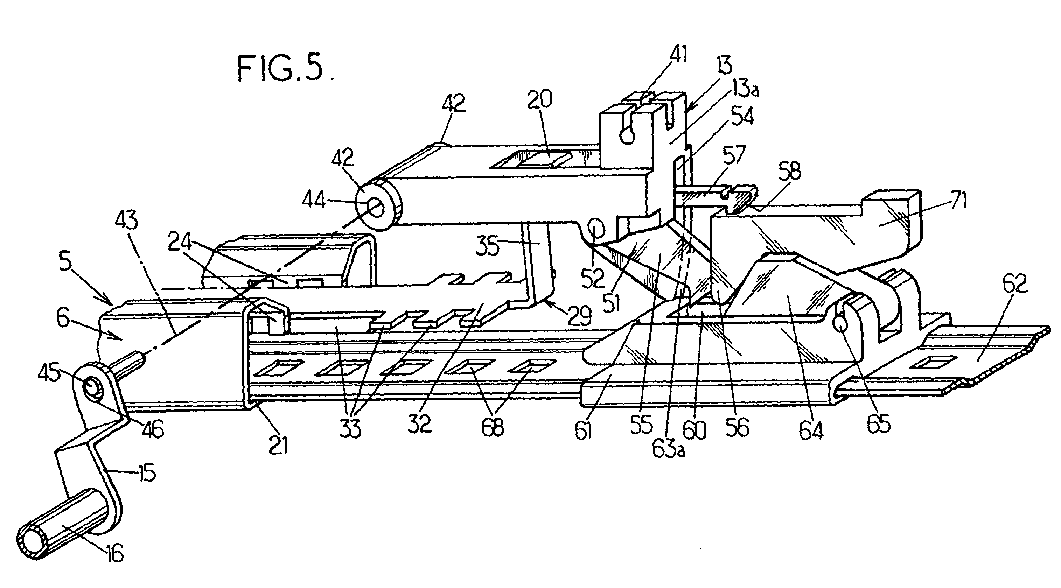

Dans cet exemple, comme on peut le voir sur la figure 4, le profilé fixe de chacune des deux glissières présente une section en forme de U ouvert vers le haut, avec un fond 21 horizontal et deux ailes verticales 22 qui se prolongent vers l'intérieur et vers le bas par deux auges rentrantes 23, lesquelles s'étendent jusqu'à un bord inférieur formant des crans 24 orientés vers le bas.

Par ailleurs, le profilé mobile 7 de chacune des deux glissières présente une section en forme de U ouvert vers le bas, qui comporte une âme supérieure horizontale 25 et deux ailes verticales 26 disposées entre les auges rentrantes 23 du profilé fixe. Les extrémités inférieures desdites ailes verticales 26 se prolongent vers le haut et vers l'extérieur par deux auges externes 27 qui pénètrent dans les auges rentrantes 23 du profilé fixe, des billes 28 étant généralement interposées entre les profilés fixe et mobile, respectivement au-dessus et au-dessous de chaque auge externe 27.

Comme on peut le voir en particulier sur la figure 3, le verrou 29 de chaque glissière se présente sous la forme d'une lame métallique élastique pliée et découpée, qui s'étend dans la direction longitudinale.

Ce verrou 29 comporte une extrémité avant 30 qui est fixée sous l'âme supérieure 25 du profilé mobile par soudage, rivetage, ou autre, et qui se prolonge vers l'avant par un ressaut 31 s'étendant sensiblement verticalement vers le bas, puis par une partie arrière 32 faiblement inclinée par rapport à l'horizontale.

Cette partie arrière 32 est déplaçable verticalement par flexion du verrou 29, et présente vers son extrémité arrière des dents latérales 33 qui s'étendent dans la direction horizontale transversale et qui, en position de repos, pénètrent dans les crans 24 du profilé fixe en traversant des fenêtres 34 ménagées dans les ailes verticales 26 du profilé mobile.

Enfin, l'extrémité arrière du verrou de glissière 29 comporte un ressaut 35 qui s'étend vers le haut, jusqu'au rebord d'appui 20 déjà mentionné pour la glissière 5 qui ne comporte pas de curseur 13.

Le ressaut 31 de chaque verrou 29 est traversé par une des branches de l'arceau de commande 9, l'extrémité de cette branche venant en appui sur la partie 32 du verrou pour la déplacer vers le bas lorsqu'on tire vers le haut la partie avant dudit arceau 9.

Par ailleurs, s'agissant plus particulièrement de la glissière 5 qui comporte le curseur 13, l'âme supérieure 25 du profilé mobile de cette glissière comporte une découpe longitudinale 36 dans laquelle coulisse le curseur 13 (voir figure 3).

Au-dessus de cette découpe, est fixée une pièce métallique de support 37 qui recouvre ladite découpe 36 et le curseur 13.

Cette pièce de support 37 comporte, respectivement à ses extrémités avant et arrière, une patte avant 38 à laquelle est fixée une des extrémités du ressort de rappel 14, et une patte arrière 39 à laquelle est fixée une des extrémités 12a de la gaine du câble gainé 12.

Par ailleurs, la pièce de support 37 comporte une découpe longitudinale 40 dans laquelle coulisse une tête 41 du curseur 13, qui fait saillie vers le haut à partir de l'extrémité arrière dudit curseur et qui est fixée à la fois à une extrémité du ressort de rappel 14 et à une extrémité du câble gainé 12.

De plus, comme on peut le voir sur la figure 5, l'extrémité avant du curseur 13 comporte deux tourillons cylindriques 42 qui font saillie latéralement par rapport audit curseur et qui sont de préférence moulés d'une seule pièce avec le curseur 13, en matière plastique.

Ces deux tourillons 42 sont en appui sur l'âme supérieure 25 du profilé mobile, de part et d'autre de la découpe 36, et permettent au curseur 13 de se déplacer en coulissement longitudinal et/ou en pivotement autour d'un axe horizontal transversal 43.

Au centre des tourillons 42, le curseur 13 est en outre traversé par un alésage horizontal transversal 44 dans lequel est engagée une tige métallique 45 qui pénètre dans une lumière oblongue 46 de la bielle 15.

Comme on peut le voir sur la figure 3, le curseur 13 est en outre traversé verticalement par un évidement 47 délimité vers l'avant par une surface de came 48 formant un pan incliné vers l'avant et vers le bas. Cet évidement 47 est en outre délimité vers l'arrière par une surface épaulée formant un rebord d'appui 49 orienté vers le haut. Le ressaut 35 du verrou de glissière 29 pénètre dans l'évidement 47 du curseur.

Dans la position de repos, une paroi horizontale 50 de la pièce de support 37 sert également de butée supérieure pour le curseur 13, dont les tourillons 42 butent également vers l'avant contre la pièce de support 37 : ainsi, en position de repos, le curseur 13 s'étend sensiblement horizontalement, tout en étant sollicité à la fois vers le haut et vers l'avant par le ressort de rappel 14.

Comme on peut le voir sur les figures 3 et 5, à l'extrémité arrière du curseur 13 est monté un crochet 51, qui se présente sous la forme d'une tôle plane découpée et qui pivote sur le curseur 13 autour d'un axe horizontal transversal 52. Le crochet 51 est sollicité vers le bas par un fil métallique élastique 53 ou éventuellement par un ressort de compression, et ledit crochet est monté dans une fente verticale 54 du curseur 13 qui est ouverte vers le bas et vers l'arrière dudit curseur.

Sur l'un des côtés de la fente 54 est ménagé un élargissement supérieur qui forme un épaulement inférieur 54a (figure 3) coopérant par butée avec un pion 51a formé par emboutissage local du crochet 51 (semi-découpe) pour limiter le pivotement dudit crochet vers le bas.

Le crochet 51 comporte deux parties faisant saillie vers l'arrière en dehors de la fente 54 :
- d'une part, une branche inférieure 55 qui se termine par un bec principal 56 orienté vers le bas et une surface de came 56a qui s'étend vers le haut et vers l'arrière à partir de l'extrémité inférieure du bec 56,
- et d'autre part, une branche supérieure 57 qui est disposée au-dessus de la branche inférieure 55 en étant séparée de celle-ci, et qui se termine par un bec auxiliaire 58 orienté vers le bas et une surface de came 58a s'étendant vers le haut et vers l'arrière à partir de l'extrémité inférieure du bec 58.

Le bec auxiliaire 58 est adapté pour venir s'accrocher dans un évidement 59 ménagé dans l'âme supérieure 25 du profilé mobile, comme il sera décrit ci-après, tandis que le bec principal 56 est adapté pour venir s'accrocher dans un logement 60 d'un patin de mémorisation 61 qui coulisse longitudinalement sur un rail métallique 62 fixé au fond 21 du profilé fixe.

Le patin de mémorisation 61, qui peut être avantageusement moulé en matière plastique, est emboîté sur le rail 62 de façon à pouvoir coulisser longitudinalement sur celui-ci avec frottement.

De plus, le patin de mémorisation 61 porte un verrou de patin 64 métallique qui est monté pivotant autour d'un axe horizontal transversal 65 à l'extrémité arrière du patin 61, et qui est sollicité vers le haut par un ressort 66 porté par ledit patin.

Le verrou de patin 64 comporte en outre des dents 67 orientées vers le bas, qui sont adaptées pour venir s'engager dans des crans 68 ménagés dans le rail 62, les crans 68 étant réalisés soit avec le même pas que les crans 24 du profilé fixe, soit avec un pas qui est un multiple entier du pas des crans 24.

Dans la position de repos, comme représenté sur la figure 3, les dents 67 du verrou de patin sont maintenues dégagées des crans 68 par le ressort 66, le nez 69 du verrou de patin étant alors en appui contre une butée 70 du patin de mémorisation et/ou contre une cale 71 qui peut se présenter par exemple sous la forme d'une tôle découpée verticale fixée par exemple par emboîtement dans l'âme supérieure 25 du profilé mobile, cette tôle s'étendant dans un plan vertical longitudinal décalé par rapport au plan du crochet 51.

La cale 71 comporte à son extrémité avant un doigt de butée 72 qui est normalement en contact avec une face avant 73 sensiblement verticale du verrou de patin. De plus, la cale 71 comporte :
- une première surface de came 74 qui coopère avec une surface d'appui supérieure 75 du verrou de patin pour maintenir engagées les dents 67 dans les crans 68 du rail 62 lorsque le profilé mobile 7 de la glissière est déplacé vers l'avant pour accéder aux places arrière du véhicule,
- et une deuxième surface de came 76 qui est conformée pour coopérer avec le bord avant de la surface d'appui supérieure 75 du verrou de patin pour faire pivoter ce verrou dans sa position verrouillée lorsque le profilé mobile 7 de la glissière revient dans sa position initiale après un accès aux places arrière du véhicule.

Les surfaces de came 74, 76 sont suffisamment inclinées pour faire pivoter le verrou de patin 64 sans glissement du patin 61 sur son rail, compte tenu du coefficient de frottement entre le patin et le rail.

Enfin, comme on le voit sur la figure 5a, le patin de mémorisation 61 comporte un nez 77 saillant vers l'avant, qui est incliné vers le haut et vers l'arrière, et dont l'utilité sera vue plus loin. Ce nez 77 est encadré par deux faces avant 77a, 77b en retrait, qui sont sensiblement verticales.

Le dispositif qui vient d'être décrit fonctionne comme suit.

Lorsqu'un utilisateur du siège veut régler la position longitudinale de ce siège, il soulève l'extrémité avant de l'arceau de commande 9, ce qui provoque le déverrouillage des deux verrous 29 des glissières.

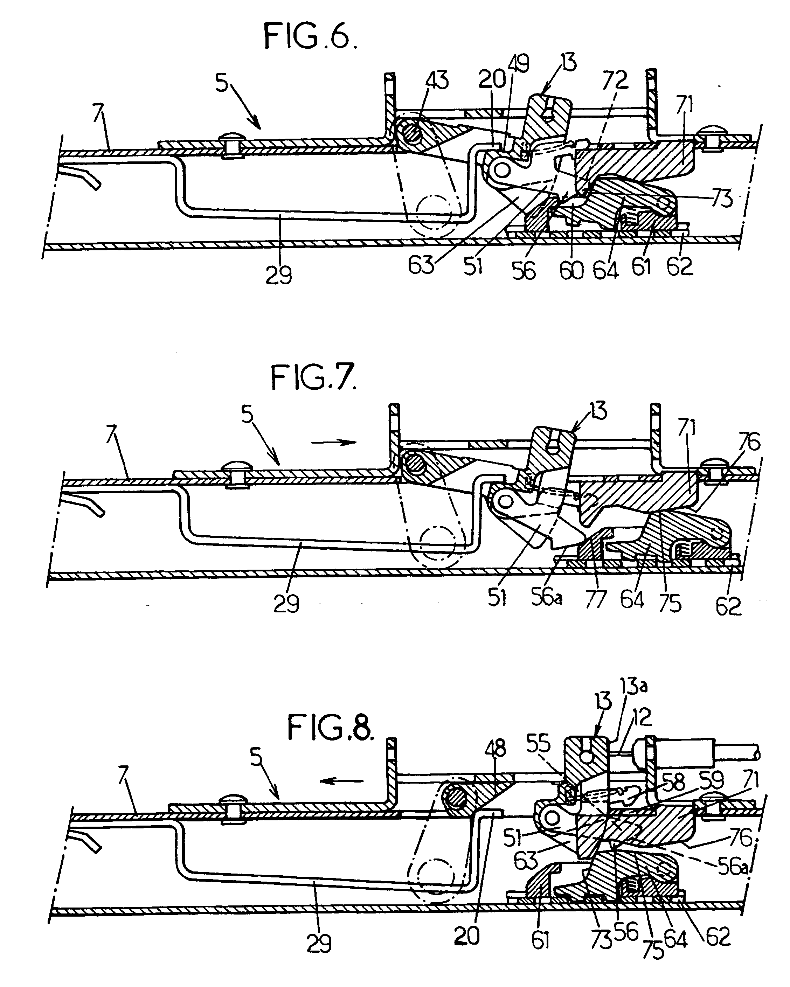

Comme représenté sur la figure 6, le bord d'appui 20 du verrou de glissière qui correspond au curseur 13 appuie alors sur le rebord d'appui 49 dudit curseur, ce qui fait pivoter l'extrémité arrière du curseur vers le bas autour de l'axe 43, jusqu'à ce que le bec principal 56 du crochet 51 s'engage dans le logement correspondant 60 du patin de mémorisation 61.

Avantageusement, l'engagement du bec principal 56 dans le logement correspondant 60 a lieu juste avant que les dents du verrou 29 ne se dégagent des crans 24 du profilé fixe.

L'utilisateur du siège peut alors régler la position longitudinale de l'assise, en entraînant le patin de mémorisation 61 avec le profilé mobile 7 de la glissière qui comporte ce patin.

Plus précisément, l'entraînement du patin de mémorisation 61 vers l'avant se fait grâce au bec principal 56 du crochet 51, tandis que l'entraînement vers l'arrière dudit patin de mémorisation se fait par coopération entre, d'une part, la face arrière 63a d'un doigt de butée 63 appartenant au curseur, et d'autre part, la face avant 77b du patin de mémorisation.

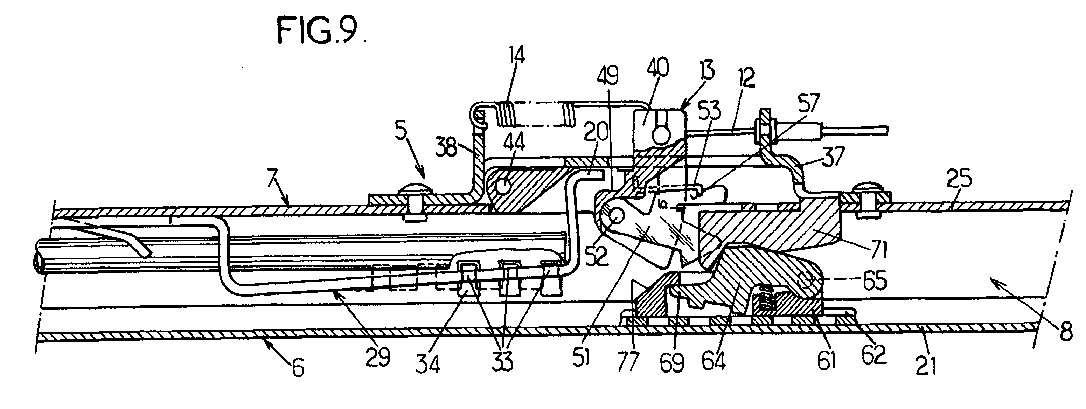

Par ailleurs, si pour une raison quelconque, le patin de mémorisation 61 s'est désolidarisé du profilé mobile 7 de la glissière par exemple à la suite d'une fausse manoeuvre (ou au cours du fonctionnement normal de la glissière dans la variante de la figure 9 qui sera décrite ci-après), alors ledit patin de mémorisation 61 peut éventuellement être raccroché au profilé mobile au cours d'un réglage de la position longitudinale d'ensemble du siège, sans même que l'utilisateur s'en aperçoive.

En effet, dans une telle situation, comme représenté sur la figure 7, si l'utilisateur vient à régler vers l'arrière la position longitudinale d'ensemble du siège, alors la surface de came 56a du crochet 51 coopère avec le bord avant incliné 77 du patin de mémorisation pour relever le crochet 51, jusqu'à ce que le bec principal 56 dudit crochet puisse s'engager dans le logement correspondant 60 du patin de mémorisation, ce qui remet la glissière dans la position représentée sur la figure 6.

Lors d'un tel accrochage du patin de mémorisation, la surface de came 76 de la came 71 coopère avec la surface d'appui supérieure 75 du verrou de patin pour placer ce verrou dans sa position verrouillée jusqu'à l'engagement complet du bec principal 56 dans son logement 60, ce qui interdit tout glissement du patin de mémorisation le long du rail 62.

Enfin, comme représenté sur la figure 8, lorsqu'on veut accéder aux places arrière du véhicule ou quitter ces places, le rabattement vers l'avant du dossier du siège provoque une traction sur le câble 12, ce qui fait coulisser le curseur 13 vers l'arrière.

Du fait de ce coulissement, la surface de came 48 du curseur agit sur le bord d'appui 20 du verrou de glissière correspondant pour placer ce verrou dans sa position déverrouillée.

De plus, le coulissement du curseur 13 fait pivoter la biellette 15 et la barre de liaison 16, ce qui déverrouille également le verrou de la glissière ne comportant pas le curseur 13.

Enfin, la surface de came 56a du crochet 51 coopère avec la face avant 73 du verrou d'appui 20 pour faire pivoter le crochet 51 vers le haut tout en faisant pivoter le verrou de patin 64 vers le bas dans sa position verrouillée, jusqu'à ce que la face arrière 13a du curseur vienne buter contre l'extrémité de la découpe 36.

Le bec principal 56 du crochet 51 vient alors appuyer sur la surface d'appui supérieure 75 du verrou de patin, et le bec auxiliaire 58 du crochet 51 se trouve au-dessus de l'évidement correspondant 59 ménagé dans l'âme supérieure 25 du profilé mobile.

On notera qu'au cours de ce mouvement, le verrou de patin 64 est de préférence placé dans sa position verrouillée avant que les verrous de glissière n'aient atteint leur position déverrouillée.

Lorsque l'assise du siège est ensuite déplacée vers l'avant pour accéder aux places arrière ou quitter ces places, la cale 71 continue tout d'abord à maintenir le verrou de patin 64 dans sa position verrouillée, tandis que le crochet 51 peut pivoter vers le bas dès que le bec principal 56 a quitté le verrou de patin, ce qui permet au bec auxiliaire 58 dudit crochet de pénétrer dans l'évidement correspondant 59.

Ainsi, même si l'utilisateur redresse ensuite le dossier du siège, le curseur 13 est maintenu dans sa position arrière par le bec auxiliaire 58, de sorte que les glissières restent déverrouillée.

Dès que le profilé mobile 7 de la glissière a été déplacé suffisamment vers l'avant, la cale 71 n'agit plus sur le verrou de patin 64, et ce verrou revient à sa position déverrouillée, le patin de mémorisation 61 conservant alors sa position simplement du fait du frottement entre ce patin et le rail 62.

Lorsqu'on déplace ensuite l'assise du siège vers l'arrière pour remettre le siège dans sa position initiale, la surface de came 76 de la cale 71 remet d'abord le verrou de patin dans sa position verrouillée, puis le crochet 51 se soulève en passant au-dessus du verrou de patin, ce qui dégage le bec auxiliaire 58 de l'évidement correspondant 59, tandis que le doigt de butée 63 et/ou 72 butent respectivement contre le patin de mémorisation 61 et son verrou 64.

Le curseur 13 peut alors revenir dans sa position avant en permettant aux verrous des deux glissières de revenir dans leur position verrouillée, dès que le siège est à nouveau relevé.

Bien entendu, l'invention n'est pas limitée à l'exemple particulier qui vient d'être décrit. Elle en englobe au contraire toutes les variantes, et notamment :
- celles dans lesquelles le bec auxiliaire 58 du crochet 51 serait supprimé, comme représenté sur la figure 9, auquel cas les glissières se reverrouillent immédiatement lorsqu'un utilisateur redresse le dossier du siège au cours d'un accès aux places arrière du véhicule, même si le siège n'est pas revenu dans sa position initiale,
- et celles dans lesquelles les deux glissières 5 du siège seraient identiques et commandées chacune par un câble gainé.

## Revendications

1. Glissière pour siège de véhicule, comportant :
- un profilé fixe (6), destiné à être solidarisé avec le véhicule,
- un profilé mobile (7), qui est monté coulissant le long du profilé fixe et qui est destiné à être solidarisé avec le siège pour permettre un déplacement de ce siège dans une direction dite longitudinale, vers l'avant et vers l'arrière, le profilé mobile délimitant avec le profilé fixe un espace intérieur creux (8) dans la glissière,
- un verrou de glissière (29) qui est monté sur le profilé mobile (7) et qui est déplaçable entre, d'une part, une position verrouillée où ledit verrou de glissière coopère avec le profilé fixe (6) pour bloquer le profilé mobile, et d'autre part, une position déverrouillée où ledit verrou de glissière ne coopère pas avec le profilé fixe et permet le coulissement dudit profilé mobile, le verrou de glissière étant sollicité élastiquement vers sa position verrouillée,
- un patin de mémorisation (61) qui est monté coulissant par rapport au profilé fixe (6) parallèlement à la direction longitudinale, ce patin de mémorisation étant disposé dans l'espace intérieur (8) de la glissière et limitant le mouvement du profilé mobile (7) vers l'arrière, en définissant ainsi une position mémorisée du profilé mobile,
- un verrou de patin (64) qui est porté par le patin de mémorisation (61) et qui est déplaçable entre, d'une part, une position verrouillée où ledit verrou de patin coopère avec des crans (68) solidaires du profilé fixe (6) pour immobiliser le patin de mémorisation par rapport au profilé fixe, et d'autre part, une position déverrouillée où ledit verrou de patin n'immobilise pas le patin de mémorisation,
- un dispositif d'accrochage de patin (13, 51) qui est monté sur le profilé mobile (7) et qui est déplaçable entre, d'une part, une position accouplée où ledit dispositif d'accrochage solidarise le patin de mémorisation (61) avec le profilé mobile, et d'autre part, une position désaccouplée où ledit dispositif d'accrochage ne solidarise pas le patin de mémorisation avec le profilé mobile,
- des premiers moyens de commande (9, 32) adaptés pour placer la glissière dans un premier état déverrouillé où le verrou de glissière (29) est dans sa position déverrouillée et le dispositif d'accrochage (13, 51) dans sa position accouplée, de façon à permettre un coulissement simultané du profilé mobile (7) et du patin de mémorisation (61) par rapport au profilé fixe (6), soit vers l'avant soit vers l'arrière, afin de régler la position mémorisée du siège,
- et des deuxièmes moyens de commande (12, 40) adaptés pour placer la glissière dans un deuxième état déverrouillé où le verrou de glissière est dans sa position déverrouillée et le dispositif d'accrochage (51) dans sa position désaccouplée, de façon à permettre un coulissement du profilé mobile (6) vers l'avant sans déplacement du patin de mémorisation (61),
le patin de mémorisation (61) coopérant par emboîtement avec frottement, avec un guide longitudinal (62) solidaire du profilé fixe (6), le profilé mobile (7) de la glissière comportant une cale (71) qui fait saillie dans l'espace intérieur creux (8) de ladite glissière, cette cale présentant une surface de came (74, 76) qui est adaptée pour coopérer avec une surface d'appui (75) appartenant au verrou de patin, et le frottement entre le patin de mémorisation (61) et le guide (62) correspondant étant suffisamment important pour que l'action de la surface de came (74, 76) de la cale sur la surface d'appui (75) du verrou de patin n'entraîne pas de coulissement longitudinal du patin de mémorisation,
**caractérisée en ce que** le verrou de patin (64) est sollicité élastiquement vers sa position déverrouillée par un ressort (66) monté sur le patin de mémorisation,
**et en ce que** ladite surface de came est conformée pour laisser le verrou de patin (64) dans sa position déverrouillée lorsque le profilé mobile (7) de la glissière est dans sa position mémorisée, et pour déplacer le verrou de patin dans sa position verrouillée lorsque le profilé mobile n'est pas dans sa position mémorisée, au moins lorsque ledit profilé mobile quitte sa position mémorisée ou revient dans ladite position mémorisée.

2. Glissière selon la revendication 1, dans laquelle la surface de came (74, 76) de la cale est conformée pour déplacer le verrou de patin (64) dans sa position verrouillée uniquement lorsque le profilé mobile (7) de la glissière se trouve décalé vers l'avant de sa position mémorisée, à une distance de ladite position mémorisée inférieure à une distance prédéterminée, laquelle distance prédéterminée est inférieure à 1 cm, de façon que le verrou de patin (64) soit dans sa position verrouillée uniquement lorsque le profilé mobile vient de quitter sa position mémorisée ou revient dans ladite position mémorisée.

3. Glissière selon la revendication 1 ou la revendication 2, dans laquelle le verrou de glissière (29) est une pièce métallique élastique contenue dans l'espace intérieur creux (8) de ladite glissière.

4. Glissière selon l'une quelconque des revendications précédentes, dans laquelle le profilé fixe (6) comporte un fond horizontal (21) qui porte le patin de mémorisation (61), le profilé mobile (7) présentant une âme supérieure horizontale (25) qui est solidaire de ladite cale (71) et qui porte un curseur (13) monté coulissant longitudinalement par rapport audit profilé mobile entre des position avant et arrière, ce curseur présentant une extrémité avant et une extrémité arrière, et l'extrémité avant dudit curseur étant montée pivotante par rapport au profilé mobile autour d'un premier axe horizontal transversal (43), de façon que ce curseur soit déplaçable entre une position parallèle audit profilé mobile et une position inclinée vers l'espace intérieur creux (8) de la glissière, ladite extrémité arrière portant un crochet (51) qui est monté pivotant par rapport audit curseur autour d'un deuxième axe horizontal transversal (52), entre des positions haute et basse, ce crochet étant sollicité élastiquement vers sa position basse et présentant un bec (56) orienté vers le bas qui est adapté pour pénétrer dans un logement (60) appartenant au patin de mémorisation (61) lorsque le curseur est dans sa position inclinée par rapport au profilé mobile et que ledit profilé mobile est dans sa position mémorisée, le curseur et son crochet formant ainsi ledit dispositif d'accrochage, le curseur comportant en outre une surface de came (48) qui coopère avec le verrou de glissière (29) pour déplacer ledit verrou de glissière de sa position verrouillée à sa position déverrouillée lorsque le curseur passe de sa position avant à sa position arrière sous l'action des deuxièmes moyens de commande (12, 40), le verrou de glissière comportant par ailleurs un rebord d'appui (20) qui est adapté pour agir sur une surface d'appui complémentaire (49) appartenant au curseur lorsque le verrou de glissière est déplacé dans sa position déverrouillée sous l'action des premiers moyens de commande (9, 32), et le curseur étant sollicité élastiquement à la fois vers sa position arrière et vers sa position horizontale.

5. Glissière selon la revendication 4, dans laquelle le curseur (13) est sollicité à la fois vers sa position arrière et vers sa position horizontale par un même ressort de traction (14) qui est monté entre d'une part, une patte de support (38) qui est solidaire du profilé mobile (7) de la glissière et qui est disposée au-dessus du niveau de l'axe de pivotement (43) du curseur, et d'autre part, une tête d'accrochage supérieure (40) disposée vers l'extrémité avant dudit curseur.

6. Glissière selon la revendication 4 ou la revendication 5, dans laquelle le crochet (51) est conformé pour s'engager dans le logement (60) du patin de mémorisation avant que le verrou de glissière (29) ne permette le coulissement du profilé mobile (7), lors de l'actionnement des premiers moyens de commande (9, 32).

7. Glissière selon l'une quelconque des revendications 4 à 6, dans laquelle le crochet (51) est conformé pour permettre l'entraînement du patin de mémorisation (61) vers l'avant lorsque ledit crochet est engagé dans le logement correspondant (60) du patin, le patin de mémorisation étant par ailleurs en contact avec une butée (73) solidaire du profilé mobile (7) lorsque ledit profilé mobile est dans sa position mémorisée, ladite butée étant disposée vers l'avant du patin de mémorisation et permettant d'entraîner ce patin vers l'arrière lors de l'actionnement des premier moyens de commande (9, 32).

8. Glissière selon l'une quelconque des revendications 4 à 7, dans laquelle le crochet (51) présente une extrémité arrière dotée d'une surface de came (56a) qui coopère avec le verrou de patin (64) lors de l'actionnement des deuxièmes moyens de commande (12, 40), pour déplacer alors le verrou de patin (64) dans sa position verrouillée tandis que le crochet (51) passe dans sa position haute par rapport au curseur.

9. Glissière selon la revendication 8, dans laquelle la surface de came (56a) du crochet est conformée pour que, lors de l'actionnement des deuxièmes moyens de commande (12, 40), le verrou de patin (64) passe dans sa position verrouillée avant que le verrou de glissière (29) ne permette le coulissement du profilé mobile (7).

10. Glissière selon la revendication 8 ou la revendication 9, dans laquelle le patin de mémorisation (61) présente un bord avant (77) qui est conformé pour que, lorsque le curseur (13) est dans sa position inclinée et que le crochet (51) est dans sa position basse, si le crochet n'est pas engagé dans le logement correspondant (60) du patin de mémorisation, alors la surface de came (56a) dudit crochet est adaptée pour glisser contre le bord avant incliné du patin de mémorisation lors d'un déplacement vers l'arrière du profilé mobile (7), en relevant ainsi le crochet jusqu'à ce que le bec (56) dudit crochet s'engage dans le logement correspondant (60) du patin de mémorisation.

11. Glissière selon l'une quelconque des revendications 8 à 10, dans laquelle le crochet (51) est solidaire d'un bec auxiliaire (58) qui, lorsque que le curseur est déplacé dans sa position arrière sous l'action des deuxièmes moyens de commande (12, 40), se trouve au-dessus d'un logement (59) ménagé dans l'âme supérieure (25) du profilé mobile, ce bec auxiliaire étant adapté pour s'engager dans le logement correspondant (59) lorsque le profilé mobile (7) quitte sa position mémorisée et que la surface de came (56a) du crochet cesse de coopérer avec le patin de mémorisation, ledit bec auxiliaire étant adapté pour retenir ensuite le curseur (13) dans sa position arrière jusqu'à ce que le profilé mobile revienne dans sa position mémorisée, où la surface de came (56a) du crochet soulève à nouveau ledit crochet et libère le bec auxiliaire (58) de son logement (59).

12. Siège de véhicule comportant une assise (3) montée coulissante longitudinalement au moyen d'au moins une glissière (5) selon l'une quelconque des revendications précédentes, l'assise du siège étant fixée au profilé mobile (7) de la glissière.

13. Siège de véhicule comportant une assise (3) montée coulissante longitudinalement au moyen d'une première glissière (5) selon l'une quelconque des revendications 4 à 11 et d'une deuxième glissière (5) comprenant également un profilé fixe (6), un profilé mobile (7) et un verrou de glissière (29) déplaçable entre des positions verrouillée et déverrouillée, l'assise (3) du siège étant fixée aux profilés mobiles (7) des glissières, le curseur (13) de la première glissière étant relié au moyen d'une biellette (15), à une barre de liaison transversale (16) qui est montée pivotante sur les profilés mobiles (7) des deux glissières et qui comporte un rebord d'appui (19) coopérant avec le verrou de glissière (29) de la deuxième glissière pour déplacer ledit verrou de la deuxième glissière dans sa position déverrouillée lors de l'actionnement des deuxièmes moyens de commande (12, 40).

## Patentansprüche

1. Gleitschiene für einen Fahrzeugsitz, umfassend:
- ein feststehendes Profil (6), dazu bestimmt, bezüglich des Fahrzeuges festgelegt zu werden,
- ein bewegliches Profil (7), gleitfähig montiert entlang des feststehenden Profils und dazu bestimmt, mit dem Sitz verbunden zu werden, um eine Versetzung des Sitzes in einer sogenannten Längsrichtung zu ermöglichen, hin nach vorne und hin nach hinten, wobei das bewegliche Profil mit dem feststehenden Profil einen Innenhohlraum (8) in der Gleitschiene begrenzt,
- ein Gleitschienenschloss (29), das an dem beweglichen Profil (7) montiert und versetzbar ist zwischen einerseits einer verriegelten Position, in welcher das Gleitschienenschloss mit dem feststehenden Profil (6) zusammenwirkt, um das bewegliche Profil (6) zu blockieren, und andererseits einer entriegelten Position, in welcher das Gleitschienenschloss nicht mit dem feststehenden Profil wechselwirkt und die Gleitfähigkeit des beweglichen Profils erlaubt, wobei das Gleitschienenschloss elastisch beaufschlagt bzw. vorgespannt ist hin zu der verriegelten Position davon,
- ein Speicherungsreiter (61), der schwenkbar montiert ist mit Bezug auf das feststehende Profil (6), und zwar parallel zur Längsrichtung, wobei der Speicherungsreiter angeordnet ist in dem Innenraum (18) der Gleitschiene und die Bewegung des beweglichen Profils (7) nach hinten hin begrenzt, wodurch eine gespeicherte Position des beweglichen Profils definiert ist,
- ein Reiterschloss (64), welches von dem Speicherungsreiter (61) gestützt ist und welches versetzbar ist zwischen einerseits einer verriegelten Position, in welcher das Reiterschloss zusammenwirkt mit Rasten (68), die mit dem feststehenden Profil (6) verbunden sind, um den Speicherungsreiter mit Bezug auf das feststehende Profil festzulegen, und andererseits einer entriegelten Position, in welcher das Reiterschloss nicht den Speicherungsreiter festlegt,
- eine Reiterverhakungseinrichtung (13, 51), an dem beweglichen Profil (7) montiert und versetzbar zwischen einerseits einer eingekoppelten Position, in welcher die Verhakungseinrichtung den Speicherungsreiter (61) mit dem beweglichen Profil verbindet, und andererseits einer entkoppelten Position, in welcher die Verhakungseinrichtung den Speicherungsreiter nicht mit dem beweglichen Profil verbindet,
- eine erste Steuereinrichtung (9, 32), ausgelegt um die Gleitschiene in einen ersten Entriegelungszustand zu versetzen, in welchem das Gleitschienenschloss (29) in seiner entriegelten Position und die Verhakungseinrichtung (13, 51) in ihrer eingekoppelten Position vorliegen, so dass ein gleichzeitiges Gleiten des beweglichen Profils (7) und des Speicherungsreiters (61) mit Bezug auf das feststehende Profil (6) sowohl nach vorne als auch nach hinten möglich ist, um die gespeicherte Position des Sitzes einstellen zu können,
- und eine zweite Steuereinrichtung (12, 40), ausgelegt um die Gleitschiene in einen zweiten Entriegelungszustand zu versetzen, in welchem das Gleitschienenschloss in seiner entriegelten Position und die Verhakungseinrichtung (51) in ihrer entkuppelten Position vorliegen, so dass eine Gleitfähigkeit des beweglichen Profils (6) nach vom ohne Versetzung des Speicherungsreiters (61) ermöglicht ist,
wobei der Speicherungsreiter (61) mittels Reibungseingriff mit einer Längsführung (62) wechselwirkt, verbunden mit dem feststehenden Profil (6), wobei das bewegliche Profil (7) der Gleitschiene einen Keil (71) umfasst, der in den Innenhohlraum (8) der Gleitschiene vorspringt, wobei der Keil eine Nockenfläche (74, 76) aufweist, die ausgelegt ist zum Zwecke der Wechselwirkung mit einer Anlagefläche (75), zugehörig zum Reiterschloss, wobei die Reibung zwischen dem Speicherungsreiter (61) und der entsprechenden Führung (62) ausreichend beachtlich ist, so dass die Wirkung der Nockenfläche (74, 76) des Keiles bezüglich der Anlagefläche (75) des Reiterschlosses nicht zu einem in Längsrichtung des Speicherungsreiters auftretenden Gleiten führt,
**dadurch gekennzeichnet, dass** das Reiterschloss (64) elastisch beaufschlagt bzw. vorgespannt ist hin zu seiner entriegelten Position mittels einer Feder (66), die an dem Speicherungsreiter montiert ist,
und dass die Nockenfläche angepasst ist, um das Reiterschloss (64) in seiner entriegelten Position zu belassen, wenn das bewegliche Profil (7) der Gleitschiene in seiner Speicherungsposition vorliegt und um das Reiterschloss in seine Verriegelungsposition zu versetzen, wenn das bewegliche Profil nicht in seiner Speicherungsposition vorliegt, zumindest während das bewegliche Profil seine Speicherungsposition verlässt oder in die genannte Speicherungsposition zurückkehrt.

2. Gleitschiene nach Anspruch 1, bei welcher die Nockenfläche (74. 76) des Keiles angepasst ist, um das Reiterschloss (64) in seine verriegelte Position lediglich dann zu versetzen, wenn das bewegliche Profil (7) der Gleitschiene versetzt vorliegt nach vorne bezüglich seiner gespeicherten Position und zwar bei einem Abstand von der Speicherungsposition, kleiner als einem vorbestimmten Abstand, welcher vorbestimmte Abstand kleiner ist als 1 cm, so dass das Reiterschloss (64) in seiner verriegelten Position lediglich dann vorliegt, wenn das bewegliche Profil gerade seine Speicherungsposition verlässt oder in die Speicherungsposition zurückkehrt.

3. Gleitschiene nach Anspruch 1 oder Anspruch 2, bei welcher das Gleitschienenschloss (29) ein elastisches metallisches Teil ist, enthalten in dem Innenhohlraum (8) der Gleitschiene.

4. Gleitschiene nach einem der vorangegangenen Ansprüche, bei welcher das feststehende Profil (6) einen horizontalen Boden (21) umfasst, der den Speicherungsreiter (61) stützt, wobei das bewegliche Profil (7) eine obere horizontale Seele (25) umfasst, die verbunden ist mit dem Keil (71) und die einen Läufer (13) stützt, schwenkbar in Längsrichtung montiert bezüglich des beweglichen Profils zwischen vorderen und hinteren Positionen, wobei der Läufer ein vorderes Ende und hinteres Ende aufweist, und wobei das vordere Ende des Läufers schwenkbar montiert ist mit Bezug auf das bewegliche Profil bezüglich einer ersten transversalen Horizontalachse (43), so dass der Läufer versetzbar ist zwischen einer Position parallel zu dem beweglichen Profil und einer geneigten Position hin zu dem Innenhohlraum (8) der Gleitschiene, wobei das hintere Ende einen Haken (51) trägt, der schwenkbar montiert ist mit Bezug auf den Läufer bezüglich einer zweiten transversalen Horizontalachse (52) zwischen einer oberen und einer unteren Position, wobei der Haken elastisch beaufschlagt bzw. vorgespannt ist hin zu seiner unteren Position und einen Schnabel (56) aufweist, ausgerichtet hin nach unten, welcher ausgelegt ist zum Eintreten in eine Aufnahme (60), zugehörig zu dem Speicherungsreiter (61), wenn der Läufer in seiner geneigten Position mit Bezug auf das bewegliche Profil vorliegt und wenn das bewegliche Profil in der Speicherungsposition vorliegt, wobei der Läufer und sein Haken somit die Verhakungseinrichtung ausbilden, wobei der Läufer ferner eine Nockenfläche (48) umfasst, wechselwirkend mit dem Gleitschienenschloss (29), um das Gleitschienenschloss zu versetzen von seiner verriegelten Position zu seiner entriegelten Position, wenn der Läufer von seiner vorderen Position zu seiner hinteren Position unter Einwirkung der zweiten Steuereinrichtung (12, 40) tritt, wobei das Gleitschienenschloss ferner einen Anlagerand (20) umfasst, der ausgelegt ist zum Wirken auf eine komplementäre Anlagefläche (49), zugehörig zu dem Läufer, wenn das Gleitschienenschloss versetzt ist in seine entriegelte Position unter der Wirkung der ersten Steuereinrichtung (9, 32), wobei der Läufer elastisch beaufschlagt oder vorgespannt ist sowohl hin zu seiner hinteren Position als auch zu seiner horizontalen Position.

5. Gleitschiene nach Anspruch 4, bei welcher der Läufer (13) sowohl zu seiner hinteren Position als auch zu seiner horizontalen Position beaufschlagt bzw. vorgespannt ist mittels ein und derselben Zugfeder (14), die montiert zwischen einerseits einer Stützlasche (38), die mit dem beweglichen Profil (7) der Gleitschiene verbunden ist, und die angeordnet ist oberhalb des Niveaus der Schwenkachse (43) des Läufers, und andererseits einem oberen Verhakungskopf (40), angeordnet hin zu dem vorderen Ende des Läufers.

6. Gleitschiene nach Anspruch 4 oder nach Anspruch 5, bei welcher der Haken (51) angepasst ist zum Eingreifen in die Aussparung bzw. Aufnahme (60) des Speicherungsreiters bevor das Gleitschienenschloss (29) ein Gleiten des beweglichen Profils (7) während der Betätigung der ersten Steuereinrichtung (9, 32) erlaubt.

7. Gleitschiene nach einem der Ansprüche 4 bis 6, bei welcher der Haken (51) ausgelegt ist, um das Antreiben des Speicherungsreiters (61) nach vorne zu ermöglichen, wenn der Haken in Eingriff steht in der entsprechenden Aufnahme (60) des Reiters, wobei der Speicherungsreiter ferner in Berührung steht mit einem Anschlag (73), der mit beweglichen Profil (7) verbunden ist, wenn das bewegliche Profil in seiner Speicherungsposition vorliegt, wobei der Anschlag angeordnet ist vorderseitig des Speicherungsreiters und es ermöglicht, den Speicherungsreitern anzutreiben nach hinten hin während der Betätigung der ersten Steuereinrichtung (9, 32).

8. Gleitschiene nach einem der Ansprüche 4 bis 7, bei welcher der Haken (51) ein hinteres Ende aufweist, welches mit einer Nockenfläche (56a) versehen ist, die zusammenwirkt mit dem Reiterschloss (64), und zwar während der Betätigung der zweiten Steuereinrichtung (12, 40), um somit das Reiterschloss (64) zu versetzen zu seiner verriegelten Position, während der Haken (51) in seine obere Position mit Bezug auf den Läufer tritt.

9. Gleitschiene nach Anspruch 8, bei welcher die Nockenfläche (56a) des Hakens angepasst ist, so dass während der Betätigung der zweiten Steuereinrichtung (12, 40) das Reiterschloss (64) in seine verriegelte Position tritt bevor das Gleitschienenschloss (29) eine Gleitfähigkeit des beweglichen Profils (7) erlaubt.

10. Gleitschiene nach Anspruch 8 oder nach Anspruch 9, bei welcher der Speicherungsreiter (61) einen vorderen Rand (77) aufweist, der anpasst ist, so dass, wenn der Läufer (13) in seiner geneigten Position und der Haken (51) in seiner niederen Position vorliegen, wenn der Haken nicht in Eingriff steht in der entsprechenden Aufnahme (60) des Speicherungsreiters, die Nockenfläche (56a) des Haken angepasst ist, um zu gleiten gegen den vorderen geneigten Rand des Speicherungsreiters während einer Versetzung hin nach hinten des beweglichen Profils (7), wodurch der Haken angehoben wird bis dass der Schnabel (56) des Haken in Eingriff tritt in die entsprechende Aufnahme (60) des Speicherungsreiters.

11. Gleitschiene nach einem der Ansprüche 8 bis 10, bei welcher der Haken (51) mit einem Hilfsschnabel (58) verbunden ist, welcher, wenn der Läufer versetzt wird in seine hintere Position unter der Einwirkung der zweiten Steuereinrichtung (12, 40), sich oberhalb einer Aufnahme (59) befindet, die in der oberen Seele (25) des beweglichen Profils ausgebildet ist, wobei der Hilfsschnabel angepasst ist um in Eingriff zu treten in die entsprechende Aufnahme (59), wenn das bewegliche Profil (7) seine Speicherungsposition verlässt und wenn die Nockenfläche (56a) des Haken aufhört, mit dem Speicherungsreiter wechselzuwirken, wobei der Hilfsschnabel ausgelegt ist, um anschließend den Läufer (13) zurückzuhalten in seiner hinteren Position bis das bewegliche Profil in seine Speicherungsposition zurückkehrt, wobei die Nockenfläche (56a) des Hakens erneut den Haken anhebt und den Hilfsschnabel (58) aus seiner Aufnahme (59) freisetzt.

12. Fahrzeugsitz, umfassend eine Sitzeinheit (3), die gleitfähig montiert ist in Längsrichtung mittels zumindest einer Schiene (5) gemäß einem der vorangegangenen Ansprüche, wobei die Stützeinheit des Sitzes am beweglichen Profil (7) der Gleitschiene festgelegt ist.

13. Fahrzeugsitz, umfassend eine Sitzeinheit (3), in Längsrichtung, gleitfähig montiert mittels einer ersten Gleitschiene (5) gemäß einem der Ansprüche 4 bis 11 und mittels einer zweiten Gleitschiene (5), ebenfalls ein feststehendes Profil (6), ein bewegliches Profil (7) und ein Gleitschienenschloss (29), versetzbar zwischen verriegelten und entriegelten Positionen, wobei die Sitzeinheit (3) des Sitzes festgelegt ist bezüglich beweglicher Profile (7) der Gleitschienen, wobei der Läufer (13) der ersten Gleitschiene mittels eines Pleuels (15) mit einer transversalen Verbindungs- oder Kopplungsstange (16) verbunden ist, die schwenkbar montiert ist bezüglich der beweglichen Profile (7) der zwei Gleitschienen und welche einen Anlagerand (19) umfasst, wechselwirkend mit dem Gleitschienenschloss (29) der zweiten Gleitschiene, um das Schloss der zweiten Gleitschiene in seine Entriegelungsposition zu versetzen während der Betätigung der zweiten Steuereinrichtung (12, 40).

## Claims

1. A slide rail for a vehicle seat, comprising:
- a fixed section (6) intended to be fixed to the vehicle,
- a mobile section (7), which is sliding mounted along the fixed section and which is intended to be fixed to the seat to allow movement of this seat in a so-called longitudinal direction, forwards and backwards, the mobile section delimiting with the fixed section a hollow inner space (8) in the slide rail,
- a slide rail catch (29) which is mounted on the mobile section (7) and which is movable between, on the one hand, a locked position wherein said slide rail catch engages with the fixed section (6) to lock the mobile section, and on the other hand, an unlocked position wherein said slide rail catch does not engage with the fixed section and allows said mobile section to slide, the slide rail catch being resiliently biassed to its locked position,
- a memory retaining runner (61) which is sliding mounted relative to the fixed section (6) parallel to the longitudinal direction, this memory retaining runner being placed in the inner space (8) of the slide rail and limiting the backward movement of the mobile section (7), defining in this way a memorised position of the mobile section,
- a runner catch (64) which is carried by the memory retaining runner (61) and which is movable between, on the one hand, a locked position wherein said runner catch engages with notches (68) integral with the fixed section (6) so as to immobilise the memory retaining runner relative to the fixed section, and on the other hand, an unlocked position wherein said runner catch does not immobilise the memory retaining runner,
- a runner lock-on device (13, 51) which is mounted on the mobile section (7) and which is movable between, on the one hand, an attached position wherein said lock-on device fixes the memory retaining runner (61) to the mobile section, and on the other hand, an unattached position wherein said lock-on device does not fix the memory retaining runner to the mobile section,
- first control means (9, 32) adapted to put the slide rail in a first unlocked state wherein the slide rail catch (29) is in its unlocked position and the lock-on device (13, 51) in its attached position, so as to allow simultaneous sliding of the mobile section (7) and the memory retaining runner (61) relative to the fixed section (6), either forwards or backwards, in order to adjust the memorised position of the seat,
- and second control means (12, 40) adapted to put the slide rail in a second unlocked state wherein the slide rail catch is in its unlocked position and the lock-on device (51) in its unattached position, so as to allow forward sliding of the mobile section (6) without moving the memory retaining runner (61),
the memory retaining runner (61) engaging by friction fitting, with a longitudinal guide (62) integral with the fixed section (6),
the mobile section (7) of the slide rail comprising a wedge (71) which projects into the hollow inner space (8) of said slide rail, this wedge having a cam surface (74, 76) which is adapted to engage with a support surface (75) belonging to the runner catch,
and the friction between the memory retaining runner (61) and the corresponding guide (62) being significant enough for the action of the wedge cam surface (74, 76) on the runner catch support surface (75) not to cause any longitudinal sliding of the memory retaining runner
**characterised in that** the runner catch (64) is resiliently biassed to its unlocked position by a spring (66) mounted on the memory retaining runner,
**and in that** said cam surface is configured so as to leave the runner catch (64) in its unlocked position when the mobile section (7) of the slide rail is in its memorised position, and to move the runner catch into its locked position when the mobile section is not in its memorised position, at least when said mobile section leaves its memorised position or returns to said memorised position.

2. A slide rail according to claim 1, wherein the wedge cam surface (74, 76) is configured so as to move the runner catch (64) into its locked position only when the mobile section (7) of the slide rail is shifted forwards from its memorised position, at a distance from said memorised position less than a pre-specified distance, which pre-specified distance is less than 1 cm, in such a way that the runner catch (64) is in its locked position only when the mobile section has just left its memorised position or is returning to said memorised position.

3. A slide rail according to claim 1 or claim 2, wherein the slide rail catch (29) is a resilient metal part contained in the hollow inner space (8) of said slide rail.

4. A slide rail according to any one of the previous claims, wherein the fixed section (6) comprises a horizontal bottom (21) which carries the memory retaining runner (61), the mobile section (7) having a horizontal upper web (25) which is integral with said wedge (71) and which carries a slider (13) mounted to slide longitudinally relative to said mobile section between front and rear positions, this slider having a front end and a rear end, and the front end of said slider being pivoting mounted relative to the mobile section around a first horizontal transverse axis (43), in such a way that this slider is movable between a position parallel to said mobile section and a position inclined towards the hollow inner space (8) of the slide rail, said rear end carrying a clip (51) which is pivoting mounted relative to said slider around a second transverse horizontal axis (52), between high and low positions, this clip being resiliently biassed towards its low position and having a downward pointing tip (56) which is adapted to penetrate in a housing (60) belonging to the memory retaining runner (61) when the slider is in its inclined position relative to the mobile section and when said mobile section is in its memorised position, the slider and its clip thus forming said lock-on device, the slider comprising additionally a cam surface (48) which engages with the slide rail catch (29) to move said slide rail catch from its locked position to its unlocked position when the slider moves from its front position to its rear position under the action of the second control means (12, 40), the slide rail comprising furthermore a support sill (20) which is adapted to act on an additional support surface (49) belonging to the slider when the slide rail catch is moved into its unlocked position under the action of the first control means (9, 32), and the slider being pulled resiliently to both its rear position and its horizontal position.

5. A slide rail according to claim 4, wherein the slider (13) is pulled to both its rear position and its horizontal position by the same tension spring (14) which is mounted between on the one hand, a support lug (38) which is integral with the mobile section (7) of the slide rail and which is placed above the level of the pivoting axis (43) of the slider, and on the other hand, an upper lock-on head (40) placed towards the front end of said slider.

6. A slide rail according to claim 4 or claim 5, wherein the clip (51) is configured to engage in the housing (60) of the memory retaining runner before the slide rail catch (29) allows the mobile section (7) to slide, when the first control means (9, 32) are activated.

7. A slide rail according to any one of claims 4 to 6, wherein the clip (51) is configured to allow the memory retaining runner (61) to be driven forward when said clip is engaged in the corresponding housing (60) of the runner, the memory retaining runner being furthermore in contact with a stop (73) integral with the mobile section (7) when said mobile section is in its memorised position, said stop-end being placed towards the front of the memory retaining runner and allowing this runner to be driven backwards when the first control means (9, 32) are activated.

8. A slide rail according to any one of claims 4 to 7, wherein the clip (51) has a rear end fitted with a cam surface (56a) which engages with the runner catch (64) when the second control means (12, 40) are activated, to then move the runner catch (64) into its locked position whereas the clip (51) moves into its high position relative to the slider.

9. A slide rail according to claim 8, wherein the cam surface (56a) of the clip is configured so that, when the second control means (12, 40) are activated, the runner catch (64) moves into its locked position before the slide rail catch (29) allows the mobile section (7) to slide.

10. A slide rail according to claim 8 or claim 9, wherein the memory retaining runner (61) has a front edge (77) which is configured so that, when the slider (13) is in its inclined position and the clip (51) is in its low position, if the clip is not engaged in the corresponding housing (60) of the memory retaining runner, then the cam surface (56a) of said clip is adapted to slide against the inclined front edge of the memory retaining runner when the mobile section (7) is moved backwards, thus lifting the clip until the tip (56) of said clip is engaged in the corresponding housing (60) of the memory retaining runner.

11. A slide rail according to any one of claims 8 to 10, wherein the clip (51) is integral with an auxiliary tip (58) which, when the slider is moved into its rear position under the action of the second control means (12, 40), is above a housing (59) arranged in the upper web (25) of the mobile section, this auxiliary tip being adapted to engage in the corresponding housing (59) when the mobile section (7) leaves its memorised position and the clip cam surface (56a) ceases to engage with the memory retaining runner, said auxiliary tip being adapted to then hold the slider (13) in its rear position until the mobile section returns to its memorised position, where the clip cam surface (56a) again raises said clip and releases the auxiliary tip (58) from its housing (59).

12. A vehicle seat comprising a seat part (3) longitudinally sliding mounted by means of at least one slide rail (5) according to any one of the previous claims, the seat part of the seat being fixed to the mobile section (7) of the slide rail.

13. A vehicle seat comprising a seat part (3) longitudinally sliding mounted by means of at least a first slide rail (5) according to any one of claims 4 to 11 and a second slide rail (5) also including a fixed section (6), a mobile section (7) and a slide rail catch (29) movable between locked and unlocked positions, the seat part (3) of the seat being fixed to the mobile sections (7) of the slide rails, the slider (13) of the first slide rail being connected by means of a link (15), to a transverse connection bar (16) which is pivoting mounted on the mobile sections (7) of the two slide rails and which comprises a support sill (19) engaging with the slide rail catch (29) of the second slide rail to move said second slide rail catch into its unlocked position when the second control means (12, 40) are activated.
